Europäisches Patentamt

(19) European Patent Office

Office européen des brevets

(11) Publication number : **0 291 336 B1**

(12) **EUROPEAN PATENT SPECIFICATION**

(45) Date of publication of patent specification :
30.10.91 Bulletin 91/44

(51) Int. Cl.⁵ : **A01D 41/12**

(21) Application number : **88304369.7**

(22) Date of filing : **13.05.88**

(54) Drive system e.g. for combine harvester.

Divisional application 90202439.7 filed on
13/05/88.

(30) Priority : **15.05.87 US 50972**

(43) Date of publication of application :
**17.11.88 Bulletin 88/46**

(45) Publication of the grant of the patent :
**30.10.91 Bulletin 91/44**

(84) Designated Contracting States :
**BE DE FR IT**

(56) References cited :
EP-A- 0 045 294
AT-B- 324 748
GB-A- 1 303 311
US-A- 3 979 964
US-A- 4 289 440

(73) Proprietor : **DEERE & COMPANY**
**1 John Deere Road**
**Moline, Illinois 61265 (US)**

(72) Inventor : **Teijido, Joseph Albert**
**1684 33rd Ave. Ct.**
**E. Moline Illinois 61244 (US)**
Inventor : **Cook, Charles Edward**
**1106 - 4th St. A**
**Hampton Illinois 61756 (US)**
Inventor : **Roe, Dennis Merle**
**106 E. 19th Ave.**
**Coal Valley Illinois 61204 (US)**

(74) Representative : **Pears, David Ashley**
**REDDIE & GROSE 16 Theobalds Road**
**London WC1X 8PL (GB)**

## Description

The present invention is directed to a drive system for a large work vehicle, such as an agricultural combine (combine harvester).

Large work vehicles, such as agricultural combines, have a single internal combustion engine for both propelling the vehicle and powering various usage assemblies for performing work. In a relatively traditional design, an agricultural combine is provided with a transversely mounted engine having a drive sheave that extends outwardly through the side sheet of the combine. The drive sheave is coupled to countershafts through belts which in turn drive the various usage assemblies. These usage assemblies include the propulsion motors, the threshing and separating means, and the harvesting means. The propulsion motors may either be driven by a belt directly or through an intermediate hydrostatic pump.

Although belt drive systems have proven to be effective means of transmitting power to the combine's various operating means, they do increase the transverse front of the machine. In Europe, there are strict regulations regulating the maximum allowable transverse front of a machine at three meters. As such, a combine with a transverse engine and transverse mounted operating means must sacrifice transverse threshing and separating area to accommodate the power transmitting systems.

The present invention reduces this problem by providing a drive system as defined in claim 1.

In a preferred embodiment of a compact driving system for a transversely mounted engine, three concentric driving shafts are housed in a single housing. Both the inner shaft and outer shaft are always live when the engine is turning, but the middle shaft is provided with a clutch which is also housed in the casing for coupling and decoupling the middle shaft to the engine. The inner shaft extends from the casing through the side sheet of the combine and is provided with a sheave for driving the unloading auger assembly. The unloader auger assembly is provided with a swing arm for coupling and decoupling the output of the inner shaft to and from the unloading auger assembly.

The outer shaft is provided with a first bevel gear assembly located inside the casing which directs the output of the outer shaft longitudinally backward. Four "piggyback" hydraulic pumps are operatively mounted to the output of the first bevel gear assembly for driving hydraulic propulsion motors, pressurizing power steering hydraulic circuits and providing hydraulic pressure for other systems on the combine. The outer shaft is always live when the engine is operating so that hydraulic pressure is always available when the engine is in operation.

The middle shaft is provided with a second bevel gear assembly located in the casing which directs the output of the middle shaft longitudinally forward. This output drive shaft extends through the clean grain tank to a third bevel gear assembly adjacent to the threshing cylinder. The third bevel gear assembly drives a transverse counter shaft having sheaves at both ends. The sheaves extend beyond the side sheets of the combine and are used for driving the threshing and separating means.

By eliminating the necessity of providing transverse sheaves for driving the propulsion motors ; by providing a means for driving the threshing and separating countershaft adjacent to the threshing cylinder ; and by locating the unloading auger drive assembly close to the unloading auger ; the length of the V-belt runs are reduced thereby reducing the overlapping of the V-belts and reducing the transverse front needed for the operating systems driving means.

## Brief Description of the Drawings

FIG. 1 is a side view of a combine schematically illustrating the operating means.

FIG. 2 is a top view illustrating the location of the engine and the driving system.

FIG. 3 is a schematic view illustrating the operating system of the combine.

FIG. 4 is a cross sectional view of the driving system.

FIG. 5 is a side view of the unloading auger driving means, including a hydraulic schematic of the control system for the driving means.

## Detailed Description

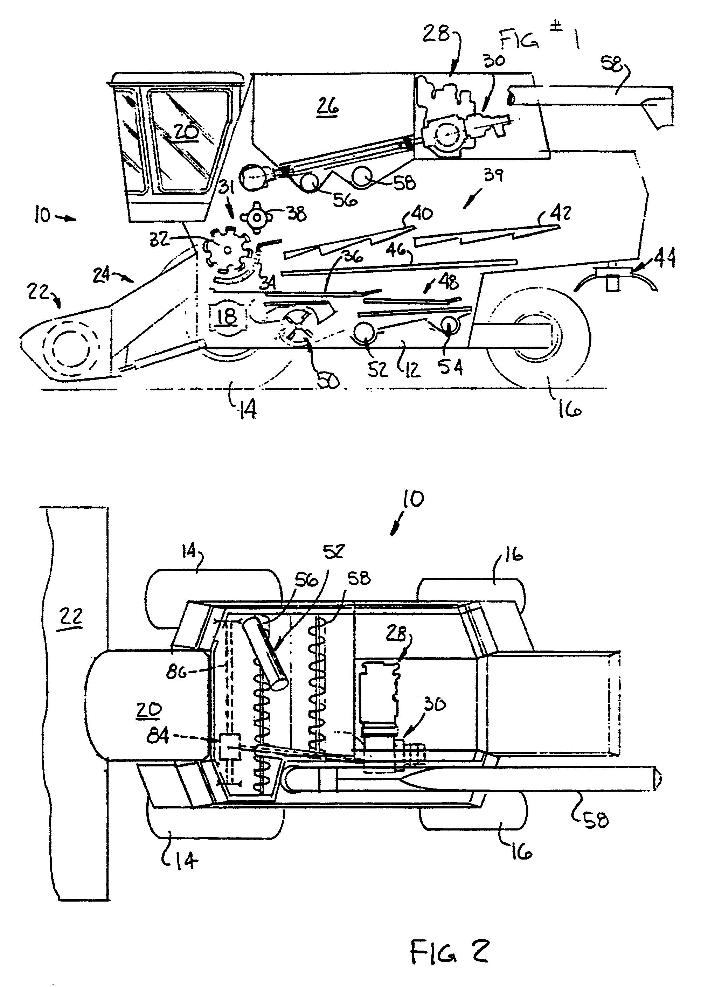

FIGS. 1 and 2 illustrate an agricultural combine 10, having a chassis 12 and ground engaging wheels 14 and 16. Forward ground engaging wheels 14 are driven by hydraulic motor 18 located between the wheels. An operator seated in operator control cab 20 controls the operation of the combine. Harvesting platform 22 extends forwardly from the chassis of the combine and is used for harvesting a crop in a field. After harvesting, the crop is then directed through feeder house 24 and into the combine. Clean grain compartment 26 is located behind the operator's cab at the top of the combine. Behind compartment 26 is transverse internal combustion engine 28 which is the prime mover of the combine, powering the propulsion means, the harvesting means, and the threshing and separating means. The internal combustion engine 28 is provided with a driving means 30 for powering the various usage assemblies.

Between the side sheets of the combine, which form the chassis of the combine, is located the threshing and separating means. The threshing and separating means separates the grain from the straw and chaff of the harvested crop. The feeder house directs and harvested grain to threshing means 31 which comprises rotating transverse threshing cylinder 32, transverse concave 34, and rotating beater 38. As the crop passes between cylinder 32 and concave 34, grain and chaff fall through the concave to pan 36 and the remaining straw and unseparated grain is advanced to beater 38.

After threshing, the straw in the crop is advanced to separating means 39. The main elements of the separating means are straw walkers 40 and 42, and cleaning shoe assembly 48. From beater 38 the crop is advanced to the oscillating straw walkers 40 and 42 which direct the straw to the rear of the combine where it is returned to the field by straw choppers 44. Grain and chaff falling through the straw walkers falls onto oscillating slanted pan 46 which directs the grain and chaff to pan 36. The grain and chaff are directed from pan 36 by overhead auger assemblies to cleaning shoe assembly 48 which is used to separate the chaff from the grain. The grain and chaff falling onto the chaffer and sieve of the cleaning shoe assembly encounters an air stream from fan 50 which blows the lighter chaff out of the rear of the combine while the heavier grain falls through the cleaning shoe assembly and into clean grain receiving auger 52.

Auger 52 directs the clean grain to a clean grain elevator (not shown) which in turn directs the grain to clean grain compartment 26. Tailings, that is unthreshed heads of grain, fall into tailings auger 54 which directs the unthreshed heads back to the threshing cylinder and concave. When the clean grain compartment is to be unloaded, transverse unloading augers 56 and 58 direct the grain to the side of the compartment from where it comes into contact with a vertical unloading auger (not shown) which directs the clean grain through unloading tube 58. During an unloading operation, tube 58 would normally be extended outwardly from the side of the combine so that clean grain can be more readily directed into a wagon or truck. It should be noted that the arrangement of the threshing and separating elements is well known, and that this invention is primarily directed to the system for driving these elements and the combine in an efficient and compact manner.

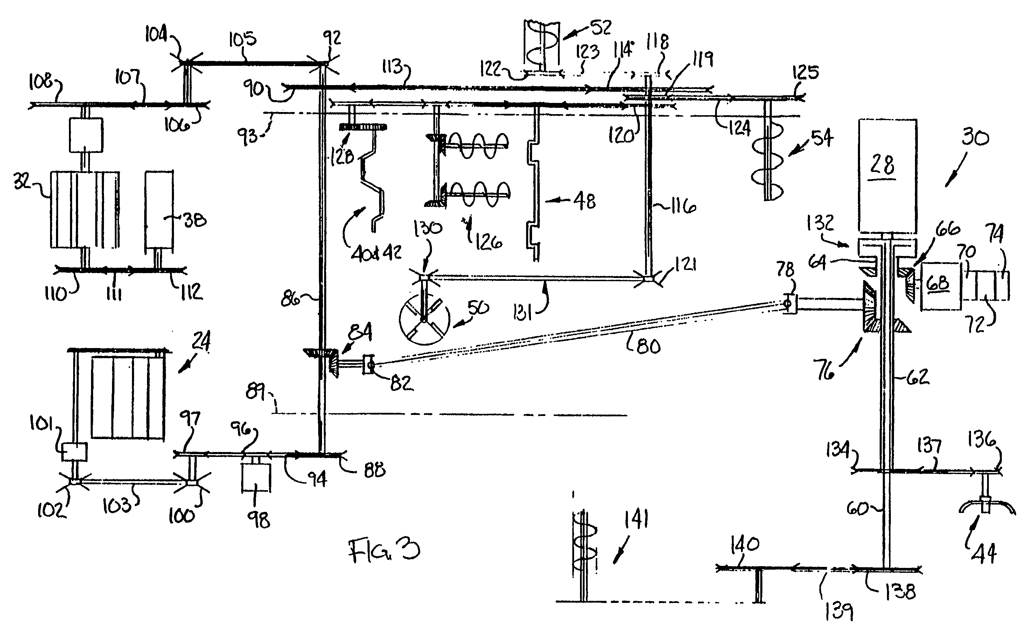

The drive system is schematically illustrated in FIG. 3, together with its relationship to the operating means of the combine. Driving system 30 comprises three concentric transverse drive shafts, inner shaft 60, hollow middle shaft 62 and hollow outer shaft 64. Outer shaft 64 is provided with a first bevel gear assembly 66, the output of which is used to drive four "piggybacked" hydraulic pumps 68, 70, 72 and 74, which are marketed by Eaton Corporation. Hydraulic pump 68 is used for supplying hydraulic fluid to hydraulic propulsion motor 18 whereas pump 70 is the priming pump for pump 68. Pump 72 provides pressurized hydraulic fluid to other systems in the combine such as the hydraulic cylinder for extending the unloading auger tube 58. Hydraulic pump 74 pressurizes the hydraulic fluid for the power steering unit on the combine.

Middle shaft 62 is provided with a second bevel gear assembly 76 having an output shaft coupled to universal joint 78. Universal joint 78 is coupled to forwardly extending drive shaft 80 having a second universal joint 82 which is operatively coupled to third bevel gear assembly 84. Bevel gear assembly 84 drives first transverse countershaft 86 which is provided with left-hand sheave 88, and right-hand sheaves 90 and 92. Left-hand sheave 88 extends outside of left side sheet 89 of the chassis whereas right hand sheaves 90 and 92 extend outside of right side sheet 93 of the chassis. Left-hand sheave 88 is operatively coupled through V-belt 94 to sheaves 96 and 97. Sheave 96 drives hydraulic pump 98 for supplying pressurized hydraulic fluid to the harvesting reel whereas sheave 97 is operatively to variable sheave 100. Variable sheave 100 is operatively coupled to variable sheave 102 by V-belt 103. The two variable sheaves form a variable speed drive for controlling the speed of the feeder house. A reverser 101 is positioned between the output of variable sheave 102 and feeder house 24 for reversing the feeder house when it becomes jammed.

Right-hand sheave 92 is a variable sheave that is operatively coupled to variable sheave 104 by V-belt 105. Variable sheaves 92 and 104 form a variable speed drive for controlling the speed of threshing means 31. Sheave 104 is operatively coupled to sheave 106 having V-belt 107 for driving sheave 108 which is operatively coupled to threshing cylinder 32. The threshing cylinder in turn is operatively coupled to sheave 110 having belt 111 for driving sheave 112. Sheave 112 drives beater 38.

Sheave 90 is operatively coupled to sheave 114 by belt 113. Sheave 114 drives second transverse countershaft 116 which is provided with sheaves 118, 119, 120 and 121. Sheave 118 is operatively coupled to clean grain auger 52 by sheave 122 and belt 123. The clean grain auger in turn is operatively coupled to the clean grain elevator for directing the clean grain upwardly into the clean grain compartment. Sheave 119 drives tailing auger 54 through V-belt 124 and sheave 125. The tailings auger is operatively coupled to conveying means for returning the tailings to the threshing cylinder.

Sheave 120 drives three separating means elements through three separate driven sheaves, that is oscillating straw walkers 40 and 42, oscillating cleaning shoe assembly 48, and grain and chaff conveying augers 126 which overlie pan 36. Conveying augers 126 are used for directing the grain and chaff on pan 36 to the cleaning shoe assembly. The straw walkers are provided with gear case 128 having two meshing spur gears. Variable sheave 121 drives fan 50 through variable sheave 130 by means of belt 131, thereby providing a variable speed fan drive.

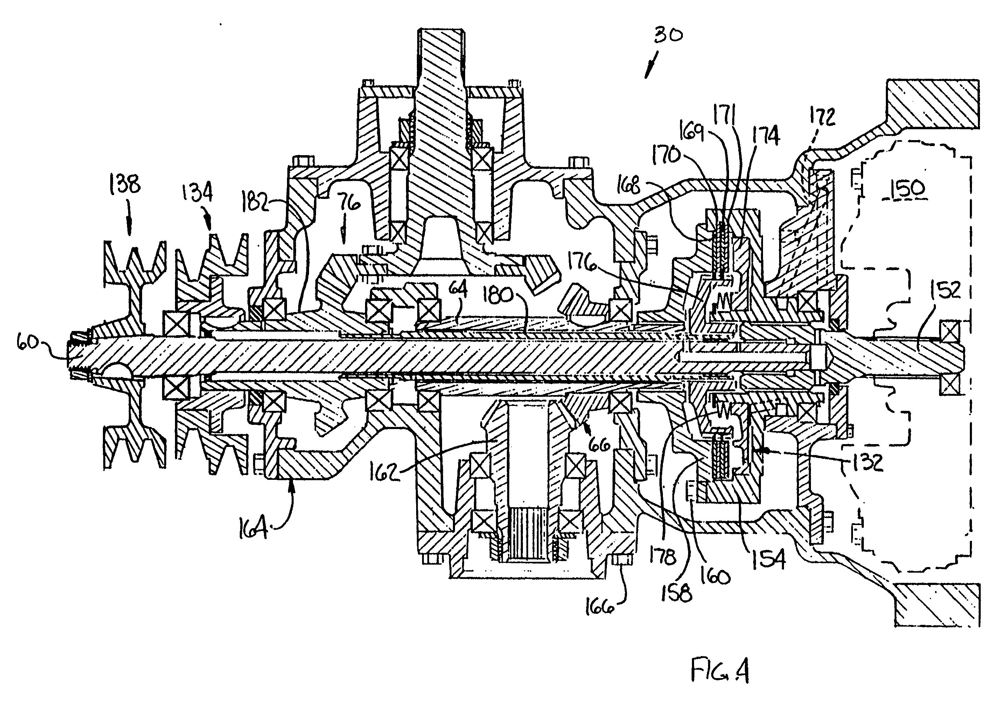

The middle shaft is also provided with clutch 132 (better illustrated in FIG. 4) for coupling and decoupling the middle shaft to the drive train. In addition, sheave 134 is mounted to the end of the middle shaft for driving straw chopper 44 through sheave 136 by means of belt 137. Therefore, when an operator wants to discontinue agricultural operations, that is harvesting, threshing, and separating, the operator decouples the middle shaft from the drive train by means of clutch 132. As such, when the middle shaft is declutched, the agricultural operations are halted, but the combine may still be driven and grain unloaded from the clean grain compartment.

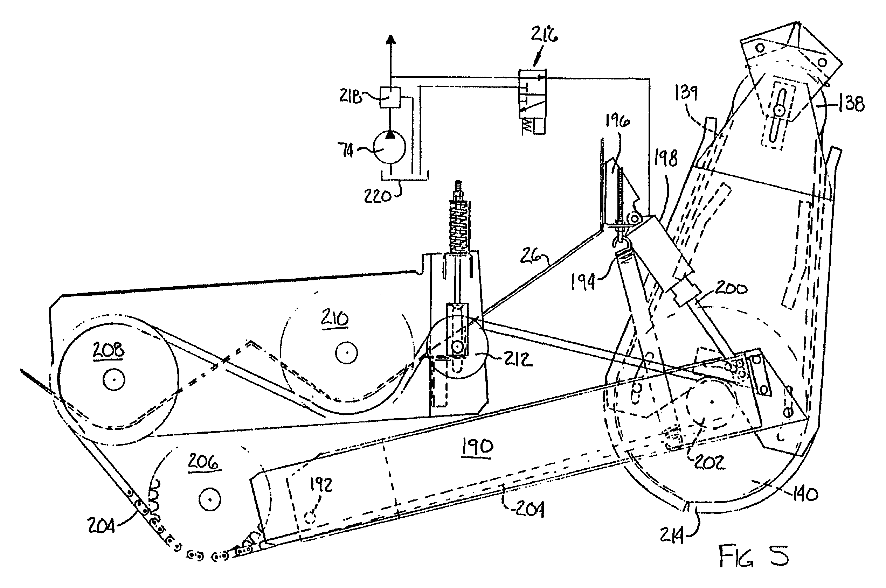

Inner shaft 60 is provided with sheave 138 having V-belt 139 for driving second sheave 140 for driving the unloading auger assembly 141. V-belt 139 is a declutchable belt from sheave 138 and its structure and operation are better illustrated in FIG. 5 which will be discussed in more detail below.

FIG. 4 illustrates the structural details of drive system 30. Engine flywheel 150 is provided with internal splines for gripping and operatively engaging stub shaft 152. The other end of the stub shaft is provided with internal and external splines which operatively engage inner shaft 60 and first annular plate 154. Plate 154 is coupled to second annular plate 158 by bolts 160 and is provided with internal splines for operatively engaging outer shaft 64. The outer shaft is provided with first bevel gear assembly 66 having an internally splined output stub shaft 162 for driving the four "piggybacked" hydraulic pumps (not shown in this figure) which are mounted to casing 164 by bolts 166. Inner shaft 60 is provided with double sheave 138 which extends beyond casing 164 and is used for driving the grain unloading assembly.

The middle shaft is provided with hydraulically actuated clutch 132 comprising internally splined friction plates 168 and 169 and pressure plates 170 and 171. The clutch is actuated by forcing hydraulic fluid through passage 172 which in turn presses piston 174 outwardly towards the friction and pressure plates. As the friction and pressure plates are compressed, the internal splines of the friction plates drive annular plate 176 which has an internal spline for operatively driving the middle drive shaft. Spring 178 normally biases the piston away from the clutch plates. The middle drive shaft comprises two hollow portions 180 and 182 which are operatively splined together. Portion 182 is operatively coupled to second bevel gear assembly 76 and straw chopper double sheave 134. The output shaft of bevel gear assembly 76 is provided with an external spline for engaging universal joint 78.

One of the key features of the present invention is how the two bevel gear assemblies are nested together to form a compact power transfer assembly. More specifically, by arranging the bevel gear assemblies so that the output members are opposite one another, the bevel gears can be compactly nested.

FIG. 5 illustrates the clutching assembly for the clean grain unloading system 141. The clean grain unloading system is driven by sheave 138 of inner shaft 60 which is provided with belt 139 for driving second sheave 140. Sheave 140 is mounted on swing arm 190 which is pivotally coupled to the chassis of the combine at 192. The swing arm is biassed upwardly by spring 194 which is mounted to bracket 196 which is bolted to the back wall of the clean grain compartment. Hydraulic cylinder 198 having piston rod 200 is used for extending the swing arm downwardly against the biassing force.

Sheave 140 is operatively coupled to sprocket 202 which is provided with chain 204. The chain engages sprockets 206, 208, 210 and 212 for the driving unloading transverse augers and thereby driving the vertical unloading augers for directing grain from clean grain compartment 26 through tube 58. Sprocket 212 is a spring biassed idler sprocket for maintaining chain tension. The swing arm comprises a U-shaped channel for protecting the chain and sprocket 202. The V-belt itself is protected by belt guard 214.

When an operator wishes to operate the unloading auger, he energizes spring biassed solenoid valve 216 into the position indicated in FIG. 5. The hydraulic fluid passes from hydraulic pump 74 through constant pressure valve 218 to valve 216 and through valve 216 to hydraulic cylinder 198. Applying hydraulic fluid to cylinder 198 drives piston rod outwardly thereby extending the swing arm downwardly. As the swing arm is extended downwardly, the spacing between sheaves 138 and 140 increases tightening the belt 139 and causing sheave 140 to be driven by constantly rotating driving sheave 138. To disengage the unloading system, the operator deenergizes valve 216 so that the spring drives the valve into a position wherein cylinder 198 is fluidically coupled to sump 220 and the flow of hydraulic fluid to the cylinder is checked. The biasing force of the spring drives hydraulic fluid in the cylinder back to the sump and the swing arm is retracted. As the swing arm is retracted, belt guard 214 contacts the bottom of the belt and pushes it upwardly so that it becomes disengaged from sheave 138.

The simplified hydraulic circuit used in moving the swing arm is identical to the unillustrated hydraulic circuit used for manipulating hydraulic clutch 132 of the middle shaft.

## Claims

1. A drive system for supplying power to three separate usage assemblies from an internal combustion engine (28) or other prime mover, characterised by an inner drive shaft (60) coupled to the prime mover (28), a hollow middle drive shaft (62) concentrically arranged about the inner drive shaft (60) and coupled to the prime mover (28), a hollow outer drive shaft (64) concentrically arranged about the middle drive shaft (62) and coupled to the prime mover (28) and means (138-140) for coupling the inner drive shaft (60) to a first usage assembly (141), means (76) for coupling the middle drive shaft to a second usage assembly (80 etc) and means (66) for coupling the outer drive shaft (64) to a third usage assembly (68-74).

2. A drive system according to claim 1, characterized in that the means for operatively coupling the outer and middle drive shafts (64, 62) to their usage assemblies comprise a first bevel gear (66) and a second bevel gear (76) respectively, with output members for transmitting rotational power outwardly from the axis of the shafts.

3. A drive system according to claim 2, characterized in that the first and second bevel gears (66, 76) are nested together so that their output members lie on opposite sides of the axis of the shafts.

4. A drive system according to claim 3, characterized in that the middle drive shaft (60) is operatively coupled to the prime mover (28) by a first clutch (132).

5. A drive system according to claim 4, characterized in that the first clutch (132) comprises a series of friction plates (168-171) which are forced together by a hydraulic piston and cylinder assembly (154, 174).

6. A drive system according to claim 4 or 5, characterized in that the first and second bevel gears (66, 76) and the first clutch (132) together with the inner, muddle and outer drive shafts (60, 62, 64) are housed in a casing (164).

7. A drive system according to any of claims 1 to 6, characterized in that the inner drive shaft (60) is provided with a second clutch (138, 139, 140) for coupling and decoupling the inner drive shaft from the first usage means (141).

8. A drive system according to claim 7, characterized in that the inner drive shaft (60) is provided with a first sheave (138) for driving a belt (139), the second clutch comprising means (198, 200) for engaging and disengaging the belt from the first sheave.

9. A drive system according to claim 8, characterized in that the means for engaging and disengaging the belt (139) from the first sheave (138) comprise a swing arm (190) on which a second sheave (140) is mounted, the belt extending around the first and second sheaves, the second sheave being coupled to the first usage assembly (141), a hydraulic cylinder (198, 200) for engaging the belt by pushing the swing arm (190) and second sheave (140) away from the first sheave (138), thereby tensioning the belt (139) on the sheave, and a spring (194) for disengaging the belt by drawing the swing arm (190) and the second sheave (140) towards the first sheave (138).

10. A drive system according to claim 9, characterized in that the second sheave (140) is provided with a belt guard (214) which when drawn toward the first sheave (138) by the spring (194), tends to force the belt (139) away from the first sheave (138).

11. A drive system according to any of claims 1 to 10, incorporated in a self-propelled work vehicle having a chassis (12), and ground engaging means (14, 16) supporting the chassis which, when rotated, drive the chassis across the ground ; characterized in that one of the usage assemblies (68-72) comprises transmission means (68) for propelling the vehicle through the ground engaging means (14).

12. A drive system according to claim 11, characterized in that the transmission means comprises a first hydraulic pump (68) which is coupled to a hydraulic motor (18) which drives the ground engaging means (14).

13. A drive system according to claim 12, characterized in that a second, third and a fourth hydraulic pump (70, 72, 74) are mounted on to the first hydraulic pump (68) in an aligned and sequential manner and are each operatively coupled to the preceding hydraulic pump for transmitting rotational power.

14. A drive system according to claim 13, characterized in that the second hydraulic pump (70) is a priming pump for the first hydraulic pump (68).

15. A drive system according to claim 13 or 14, characterized in that the third hydraulic pump (72) supplies hydraulic fluid to a hydraulic control system.

16. A drive system according to claim 13, 14 or 15, characterized in that the fourth hydraulic pump (74) supplies hydraulic fluid to a power steering assembly.

17. A drive system according to any of claims 11 to 16, wherein the vehicle is a self-propelled agricultural combine harvester for harvesting a crop from a field and threshing the harvested crop to separate grain from straw and chaff, comprising a harvesting means (22) extending from the front of the chassis (12), a threshing and separating means (31, 39) located inside the combine harvester for separating grain from straw and chaff, a feeder house (24) for directing a harvested crop from the harvesting means to the threshing and separating means ; a clean grain compartment (26) mounted on the chassis to receive the separated grain from the threshing and separating means, and an unloading auger (141) for unloading the grain compartment, characterized in that one of the usage assemblies (80 etc.) comprises the harvesting, threshing and separating means (22, 31, 39).

18. A drive system according to claim 17, characterized in that another of the usage assemblies (141) is the unloading auger.

19. A drive system according to claims 8 and 18, characterized in that the unloading auger (141) is provided with a second sheave (140) which is driven by the first sheave (138) through the associated belt (139).

20. A drive system according to claim 17 or 18, characterized in that the prime mover (28) is a transverse internal combustion engine, which is located at the back of the combine harvester behind the clean grain compartment (26).

21. A drive system according to claim 20, characterized in that an output shaft (80) that is coupled to the second bevel gear (76) extends forward from the transversely mounted internal combustion engine (28) through the clean grain compartment (26) to a third bevel gear (84) that is coupled through a transverse shaft (86) to the harvesting means (22) and the threshing and separating means (31, 39).

22. A drive system according to claim 21, characterized in that the ends of the transverse shaft (86) carry sheaves (88, 92) coupled by belts (94, 105) to the harvesting means (22) and the threshing and separating means (31, 39).

**Patentansprüche**

1. Antriebssystem zum Liefern von Antriebskraft von einer Brennkraftmaschine (28) oder einer anderen Antriebsmaschine zu drei getrennten Verwendungsanordnungen, **gekennzeichnet** durch eine innere Antriebswelle (60), die mit der Antriebsmaschine (28) gekuppelt ist; eine hohle, mittlere Antriebswelle (62), die konzentrisch um die innere Antriebswelle (60) angeordnet und mit der Antriebsmaschine (28) gekuppelt ist, eine hohle äußere Antriebswelle (64), die konzentrisch um die mittlere Antriebswelle (62) angeordnet und mit der Antriebsmaschine (28) verbunden ist; sowie durch Mittel (138-140) zum Kuppeln der inneren Antriebswelle (60) mit einer ersten Verwendungsanordnung (141); Mitteln (76) zum Kuppeln der mittleren Antriebswelle mit einer zweiten Verwendungsanordnung (80 usw.) und Mitteln (66) zum Kuppeln der äußeren Antriebswelle (64) mit einer dritten Verwendungsanordnung (68-74).

2. Antriebssystem nach Anspruch 1, dadurch **gekennzeichnet**, daß die Mittel zum arbeitsmäßigen Kuppeln der äußeren und der mittleren Antriebswellen (64, 62) mit ihren Verwendungsanordnungen ein erstes Kegelrad (66) bzw. ein zweites Kegelrad (76) mit Ausgangsgliedern zum Übertragen der rotierenden Antriebskraft von der Achse der Wellen nach außen umfassen.

3. Antriebssystem nach Anspruch 2, dadurch **gekennzeichnet**, daß die ersten und zweiten Kegelräder (66, 76) so zueinander angeordnet sind, daß ihre Ausgangsglieder auf entgegengesetzten Seiten der Achse der Wellen liegen.

4. Antriebssystem nach Anspruch 3, dadurch **gekennzeichnet**, daß die mittlere Antriebswelle (60) arbeitsmäßig mit der Antriebsmaschine (28) über eine erste Kupplung (132) verbunden ist.

5. Antriebssystem nach Anspruch 4, dadurch **gekennzeichnet**, daß die erste Kupplung (132) einen Satz von Reibungsplatten (168-171) aufweist, welche durch eine hydraulische Kolben/Zylinder-Anordnung (154, 174) zusammenpreßbar sind.

6. Antriebssystem nach Anspruch 4 oder 5, dadurch **gekennzeichnet**, daß die ersten und zweiten Kegelräder (66, 76) und die erste Kupplung (132) zusammen mit der inneren, der mittleren und der äußeren Antriebswelle (60, 62, 64) in einem Gehäuse (164) angeordnet sind.

7. Antriebssystem nach irgendeinem der Ansprüche 1 bis 6, dadurch **gekennzeichnet**, daß die innere Antriebswelle (60) mit einer zweiten Kupplung (138, 139, 140) versehen ist, um die innere Antriebswelle mit den ersten Verwendungsmitteln (141) zu kuppeln bzw. von diesen zu lösen.

8. Antriebssystem nach Anspruch 7, dadurch **gekennzeichnet**, daß die innere Antriebswelle (60) mit einer ersten Antriebsscheibe (138) für einen Treibriemen (139) versehen ist, wobei die zweite Kupplung Mittel (198, 200) zum Einrücken und Lösen des Riemens von der ersten Antriebsscheibe aufweist.

9. Antriebssystem nach Anspruch 8, dadurch **gekennzeichnet**, daß die Mittel zum Einrücken und Lösen des Riemens (139) von der ersten Antriebsscheibe (138) einen Schwenkarm (190) umfassen, auf dem eine zweite Antriebsscheibe (140) montiert ist, wobei der Riemen um die ersten und die zweiten Antriebsscheiben läuft, und die zweite Antriebsscheibe mit der ersten Verwendungsanordnung (141) gekuppelt ist, daß ein hydraulischer Zylinder (198, 200) vorgesehen ist, um den Riemen zum Eingreifen zu bringen durch Verschwenken des Schwenkarmes (190) und der zweiten Antriebsscheibe (140) weg von der ersten Antriebsscheibe (138), wodurch der Riemen (139) auf der Scheibe gespannt wird, und daß eine Feder (194) zum Lösen des Riemens vorgesehen ist, indem sie den Schwenkarm (190) und die zweite Antriebsscheibe (140) in Richtung auf die erste Antriebsscheibe (138) zieht.

10. Antriebssystem nach Anspruch 9, dadurch **gekennzeichnet**, daß die zweite Antriebsscheibe (140) mit einer Riemensicherung (214) versehen ist, die dann, wenn die zweite Antriebsscheibe in Richtung auf die erste Antriebsscheibe (138) durch die Feder (194) gezogen wird, dazu neigt, den Riemen (139) von der ersten Antriebsscheibe (138) wegzudrängen.

11. Antriebssystem nach irgendeinem der Ansprüche 1 bis 10, das in ein selbstfahrendes Arbeitsfahrzeug integriert ist, das ein Chassis (12) sowie am Boden angreifende Mittel (14, 16) zum Unterstützen des Chassis aufweist, welche dann, wenn sie rotieren, das Chassis über den Boden bewegen, dadurch **gekennzeichnet**, daß eine der Verwendungsanordnungen (68-72) Getriebemittel (68) zum Vortreiben des Fahrzeuges mit Hilfe der am Boden angreifenden Mittel (14) umfaßt.

12. Antriebssystem nach Anspruch 11, dadurch **gekennzeichnet**, daß die Getriebemittel eine erste hydraulische Pumpe (68) umfassen, welche mit einem hydraulischen Motor (18) gekuppelt ist, der die am Boden angreifenden Mittel (14) antreibt.

13. Antriebssystem nach Anspruch 12, dadurch **gekennzeichnet**, daß eine zweite, eine dritte und die vierte hydraulische Pumpe (70, 72, 74) an der ersten hydraulischen Pumpe (68) angebaut sind, und zwar in einer ausgerichteten Folge, von denen jede arbeitsmäßig mit der vorgeordneten hydraulischen Pumpe zur Übertragung von rotierender Antriebskraft gekuppelt ist.

14. Antriebssystem nach Anspruch 13, dadurch **gekennzeichnet**, daß die zweite hydraulische Pumpe (70) eine Ladepumpe für die erste hydraulische Pumpe (68) ist.

15. Antriebssystem nach Anspruch 13 oder 14, dadurch **gekennzeichnet**, daß die dritte hydraulische Pumpe (72) hydraulisches Fluid einem hydraulischen Steuersystem zuführt.

16. Antriebssystem nach Anspruch 13, 14 oder 15, dadurch **gekennzeichnet**, daß die vierte hydraulische Pumpe (74) hydraulisches Fluid einer Kraftlenkeinrichtung zuleitet.

17. Antriebssystem nach irgendeinem der Ansprüche 11 bis 16, bei dem das Fahrzeug eine selbstfahrende landwirtschaftliche kombinierte Erntemaschine zum Ernten des Erntegutes vom Feld und zum Dreschen des geernteten Gutes zwecks Trennen des Kornes von Stroh und Spreu umfaßt, welche Maschine Erntemittel (22) umfaßt, die sich vom vorderen Ende des Chassis (12) aus erstrecken, Dresch- und Trennmittel (31, 39), die innerhalb des Mähdreschers zum Trennen des Kornes von Stroh und Spreu angeordnet ist ; ein Zuführungsgehäuse (24) zum Leiten des geernteten Erntegutes von den Erntemitteln zu den Dresch- und Trennmitteln, eine Reinkorn-Sammelkammer (26), die auf dem Chassis zur Aufnahme des abgetrennten Kornes von den Dresch- und Trennmitteln montiert ist, und eine Entladeschraube (141) aufweist, um die Kornsammelkammer zu Entladen, dadurch **gekennzeichnet**, daß eine der Verwendungsanordnungen (80 usw.) die Ernte-, Dresch- und Trennmittel (22, 31, 39) umfaßt.

18. Antriebssystem nach Anspruch 17, dadurch **gekennzeichnet**, daß eine andere der Verwendungsanordnungen (141) die Entladeschraube ist.

19. Antriebssystem nach Anspruch 8 und 18, dadurch **gekennzeichnet**, daß die Entladeschraube (141) mit einer zweiten Antriebsscheibe (140) versehen ist, welche durch die erste Antriebsscheibe (138) über den zugehörigen Riemen (139) angetrieben wird.

20. Antriebssystem nach Anspruch 17 oder 18, dadurch **gekennzeichnet**, daß die Antriebsmaschine (28) eine quer angeordnete Brennkraftmaschine ist, welche am rückwärtigen Teil des Mähdreschers hinter der Reinkorn-Sammelkammer (26) angeordnet ist.

21. Antriebssystem nach Anspruch 20, dadurch **gekennzeichnet**, daß eine Ausgangswelle (80), die mit dem zweiten Kegelrad (76) gekuppelt ist, sich von der quer montierten Brennkraftmaschine (28) nach vorne durch die Reinkorn-Sammelkammer (26) zu einem dritten Kegelrad (84) erstreckt, das durch eine Querwelle (86) mit den Erntemitteln (22) und den Dresch- und Trennmitteln (31, 39) gekuppelt ist.

22. Antriebssystem nach Anspruch 21, dadurch **gekennzeichnet**, daß die Enden der Querwelle (86) Antriebsräder (88, 92) trägt, die durch Riemen (94, 105) mit den Erntemitteln (22) und den Dresch- und Trennmitteln (31, 39) verbunden sind.

**Revendications**

1. Système d'entraînement destiné à appliquer une puissance à trois appareils d'utilisation séparés à partir d'un moteur à combustion interne (28) ou d'une autre machine motrice, caractérisé par un arbre intérieur d'entraînement (60) accouplé à la machine motrice (28), un arbre d'entraînement médian creux (62) disposé concentriquement autour de l'arbre intérieur d'entraînement (60) et accouplé à la machine motrice (28), un arbre d'entraînement extérieur creux (64) disposé concentriquement autour de l'arbre d'entraînement médian (62) et accouplé à la machine motrice (28) et des moyens (138-140) pour accoupler l'arbre intérieur d'entraînement (60) à un premier appareil d'utilisation (141), des moyens (76) pour accoupler l'arbre d'entraînement médian à un second appareil d'utilisation (80, 40) et des moyens (66) pour accoupler l'arbre d'entraînement extérieur (64) à un troisième appareil d'utilisation (68-74).

2. Système d'entraînement selon la revendication 1, caractérisé en ce que les moyens pour accoupler de façon opérationnelle les arbres d'entraînement extérieur et médian (64, 62) à leurs appareils d'utilisation comprennent respectivement un premier pignon conique (66) et un second pignon conique (76), avec des éléments de sortie servant à transmettre une puissance d'entraînement en rotation à l'extérieur à partir de l'axe des arbres.

3. Système d'entraînement selon la revendication 2, caractérisé en ce que les premier et second pignons coniques (66, 76) engrènent réciproquement de sorte que leurs éléments de sortie sont situés sur des côtés opposés de l'axe des arbres.

4. Système d'entraînement selon la revendication 3, caractérisé en ce que l'arbre d'entraînement médian (60) est accouplé de façon opérationnelle à la machine matrice (28) par un premier embrayage (132).

5. Système d'entraînement selon la revendication 4, caractérisé en ce que le premier embrayage (132) comprend une série de disques de friction (168, 171) qui sont repoussés à force les uns contre les autres par un ensemble hydraulique à piston et cylindre (154, 174).

6. Système d'entraînement selon la revendication 4 ou 5, caractérisé en ce que les premier et second pignons coniques (66, 76) et le premier embrayage (132) sont logés, conjointement avec les arbres d'entraînement intérieur, médian et extérieur (66, 62, 64) dans un carter (164).

7. Système d'entraînement selon l'une quelconque des revendications 1 à 6, caractérisé en ce que l'arbre d'entraînement intérieur (63) comporte un second embrayage (138, 139, 140) servant à accoupler l'arbre d'entraînement intérieur aux premiers moyens d'utilisation (141) et à découpler cet arbre de cet appareil.

8. Système d'entraînement selon la revendication 7, caractérisé en ce que l'arbre d'entraînement intérieur (60) comporte une première poulie (138) servant à entraîner une courroie (139), le second embrayage comprenant des moyens (198, 200) pour appliquer la courroie sur la première poulie et l'en écarter.

9. Système d'entraînement selon la revendication 8, caractérisé en ce que les moyens pour appliquer la courroie (139) sur la première poulie (138) et l'en dégager comprennent un bras oscillant (190), sur lequel est montée une seconde poulie (140), la courroie s'étendant autour des première et seconde poulies et la seconde poulie étant accouplée au premier appareil d'utilisation (141), un vérin hydraulique (198, 200) servant à appliquer la courroie sur la première poulie (138) par écartement du bras oscillant (190) et de la seconde poulie (140) par rapport à la première poulie, ce qui applique sous tension la courroie (139) sur la poulie, et un ressort (194) servant à écarter la poulie par traction du bras oscillant (190) et de la seconde poulie (140) en direction de la première poulie (138).

10. Système d'entraînement selon la revendication 9, caractérisé en ce que la seconde poulie (140) comporte un élément de protection de courroie (214) qui, lorsqu'il est tiré vers la première poulie (138) par le ressort (194), tend à écarter à force la courroie (139) de la première poulie (138).

11. Système d'entraînement selon l'une quelconque des revendications 1 à 10, incorporé dans un véhicule de travail autopropulsé comportant un châssis (12) et des moyens (14, 16) de support au sol, supportant le châssis et qui, lorsqu'ils tournent, déplacent le châssis sur le sol ; caractérisé en ce qu'un des appareils d'utilisation (68-62) comprend des moyens de transmission (68) servant à déplacer le véhicule par l'intermédiaire des moyens (14) de support au sol.

12. Système d'entraînement selon la revendication 11, caractérisé en ce que les moyens de transmission comprennent une première pompe hydraulique (68), qui est accouplée à un moteur hydraulique (18), qui entraîne les moyens (14) de support au sol.

13. Système d'entraînement selon la revendication 12, caractérisé en ce que des seconde, troisième et quatrième pompes hydrauliques (70, 72, 74) sont montées sur la première pompe hydraulique (68) en étant alignées et les unes derrière les autres et sont chacune accouplées de façon opérationnelle à la pompe hydraulique précédente pour la transmission de la puissance de rotation.

14. Système d'entraînement selon la revendication 13, caractérisé en ce que la seconde pompe hydraulique (70) est une pompe d'amorçage pour la première pompe hydraulique (68).

15. Système d'entraînement selon la revendication 13 ou 14, caractérisé en ce que la troisième pompe hydraulique (72) envoie un fluide hydraulique à un système de commande hydraulique.

16. Système d'entraînement selon la revendication 13, 14 ou 15, caractérisé en ce que la quatrième pompe hydraulique (74) envoie un fluide hydraulique à un dispositif de direction assistée.

17. Système d'entraînement selon l'une quelconque des revendications 11 à 16, dans lequel le véhicule est une moissonneuse-batteuse agricole autopropulsée servant à ramasser une récolte à partir d'un champ et battre la récolte ramassée pour séparer les grains de la paille et des balles, et comprenant des moyens de moissonnage (22) s'étendant à partir de l'avant du châssis (12), et des moyens (31, 39) de battage et de séparation, situés à l'intérieur de la moissonneuse-batteuse pour séparer les grains de la paille et des balles, un carter (24) logeant un dispositif d'amenée pour diriger une récolte ramassée depuis les moyens de moissonnage en direction des moyens de battage et de séparation ; un compartiment (26) recevant les grains propres et monté sur le châssis de manière à recevoir les grains séparés provenant des moyens de battage et de séparation, et une vis convoyeuse de déchargement (141) servant à décharger le compartiment recevant les grains, caractérisé en ce que l'un des appareils d'utilisation (80,etc) comprend les moyens (22, 31, 39) de moissonnage, de battage et de séparation.

18. Système d'entraînement selon la revendication 17, caractérisé en ce qu'un autre des appareils d'utilisation (141) est la vis convoyeuse de déchargement.

19. Système d'entraînement selon les revendications 8 à 18, caractérisé en ce que la vis convoyeuse de déchargement (141) comporte une seconde poulie (140) qui est entraînée par la première poulie (138) par l'intermédiaire de la courroie associée (139).

20. Système d'entraînement selon la revendication 17 ou 18, caractérisé en ce que la machine motrice (21) est un moteur à combustion interne transversal, qui est situé à l'arrière de la moissonneuse-batteuse, en arrière du compartiment (26) recevant les grains propres.

21. Système d'entraînement selon la revendication 20, caractérisé en ce qu'un arbre de sortie (80), qui est accouplé au second pignon conique (76), s'étend vers l'avant à partir du moteur à combustion interne (28) monté transversalement, à travers le compartiment (26) recevant les grains propres jusqu'à un troisième pignon conique (84) qui est accouplé par l'intermédiaire d'un arbre transversal (86) aux moyens de moissonnage (22) et aux moyens de battage et de séparation (31, 39).

22. Système d'entraînement selon la revendication 21, caractérisé en ce que les extrémités de l'arbre transversal (86) portent les poulies (88, 92) accouplées par des courroies (94, 105) aux moyens de moissonnage (22) et aux moyens de battage et de séparation (31, 39).

FIG #1

FIG 2

FIG 3

EP 0 291 336 B1

FIG.4

FIG 5